# FASCICULE DE BREVET EUROPEEN

(11) **EP 2 343 540 B1**
(45) Date de publication et mention de la délivrance du brevet: **19.09.2012**
(21) Numéro de dépôt: 10192613.7
(22) Date de dépôt: 25.11.2010
(51) Int. Cl.: G01N 27/04, E04C 2/38

(54) **Elément de construction préfabriqué pour une maison à ossature en bois avec détection d'humidité intégrée**
Fertigbauelement für ein Haus in Holzskelettbauweise mit integrierter Feuchtigkeitserkennung
Prefabricated construction element for a timber-framed house with built-in damp detection

(30) Priorité: 12.01.2010 BE 201000015
(43) Date de publication de la demande: 13.07.2011
(73) Titulaire: Moutschen, Patrick, 4141 Louveigne (BE)
(72) Inventeur: Moutschen, Patrick, 4141 Louveigne (BE)
(74) Mandataire: pronovem

(56) Documents cités:
- WO-A2-2005/010837
- WO-A2-2006/014111
- GB-A- 2 457 891
- US-A- 5 136 249
- 'High Performance Modular Wood Construction Systems', [en ligne] 01 Janvier 2007, XP55021586 Extrait de l'Internet: <URL:http://www.unb.ca/fredericton/forestry /wstc/_resources/pdf/unb5.pdf> [extrait le 2012-03-12]

## Description

### Objet de l'invention

La présente invention se rapporte à un élément de construction pour une maison à ossature en bois qui comporte une détection d'humidité intégrée permettant de détecter l'eau de condensation ou les infiltrations d'eau dans ces éléments. Elle se rapporte également à une méthode de détection de taux d'humidité anormalement élevés au moyen de cette détection intégrée.

### Etat de la technique

Dans le secteur de la construction les infiltrations d'eau sont toujours très problématiques et entraînent des dégâts importants. Dans le domaine de la construction des maisons à ossature en bois cette problématique est exacerbée pour des raisons évidentes puisque des moisissures peuvent se former à partir de 20 % d'humidité au sein du bois, si ce taux d'humidité persiste.

Il existe donc une demande de la part des architectes et des maîtres d'ouvrage pour une détection d'humidité précoce si possible intégrée au sein de l'élément de construction lui-même permettant tous les apaisements sur la problématique de l'humidité dans les constructions à ossature bois.

Les détecteurs d'humidité sont connus en tant que tels et largement utilisés pour détecter les infiltrations d'eau. Le document US 5,008,652 divulgue par exemple un système de détection de fuites d'eau dans un plafond basé sur l'écoulement de l'eau vers un réceptacle muni de senseurs.

L'utilisation de fils conducteurs au sein d'une maison d'habitation pour détecter des fuites ou des infiltrations d'eau est également connue de l'homme de métier. Le document US 5,081,422 divulgue un procédé de détection basé sur un ensemble de fils verticaux et horizontaux fixés sur du bois contreplaqué . La localisation de l'infiltration d'eau est basée sur des mesures de résistivité au croisement des fils horizontaux et verticaux sur un réseau de fils recouvrant toute la construction. Ce système n'est cependant pas intégré à un élément de construction en particulier. Le document US 4,965,554 divulgue un procédé analogue.

Le document US 6,175,310 divulgue une bande collante conductrice munie de deux fils qui peut être appliquée sur n'importe quelle surface pour détecter des fuites d'eau et un procédé de détection. Aucun élément de construction spécifique qui intègre une telle bande dès sa fabrication n'est cependant divulgué.

D'autres systèmes s'attachent à mesurer ponctuellement le taux d'humidité dans des matériaux isolants. De tels systèmes sont par exemple divulgués dans EP1873322 A2.

Le document US 2003/0084638 A1 divulgue quant à lui une structure de construction avec une paroi extérieure et une paroi intérieure et un vide ventilé muni d'un système de ventilation permettant une ventilation forcée lorsque l'on détecte un taux d'humidité anormalement élevé. La ventilation est asservie par un système de détection d'humidité.

Le document CA 2596212 divulgue un système de surveillance de l'humidité pour immeubles alimenté par des sondes de détection d'humidité qui émet un signal d'alarme en cas de détection de valeurs anormales à la suite d'une évaluation de l'évolution anormale de l'humidité dans le temps et à une comparaison à d'autres valeurs environnementales. Il s'agit d'un monitoring global.

Le document US 2003/0222783 A1 divulgue un système de détection et de localisation d'humidité global se basant sur des mesures dans plusieurs bâtiments. Il s'agit de détecteurs sans fils placés à des endroits critiques dans les constructions comme les coins des portes et des fenêtres. Les détecteurs d'humidité génèrent des signaux sonores ou visuels reliés à un boitier central en cas de détection d'humidité. Ces signaux sont transmis à un ordinateur central pouvant gérer de nombreux immeubles simultanément. Aucun élément de construction préfabriqué en particulier n'est divulgué dans ce document.

Les documents WO 2006/014111 et WO 2005/010837 décrivent un dispositif de détection d'humidité comprenant un module externe de mesure de taux d'humidité d'une structure en bois par mesure de résistivité. Ce dispositif est inséré à postériori dans le cas de WO 2006/014111, par exemple par forage au travers de la structure, tandis qu'il est collé au moyen d'un ruban adhésif dans le cas de WO 2005/010837.

Enfin, le document "High performance Modular Wood Construction projet n° UNB5, valve to wood Projet, publié en avril divulgue un élément de construction pour une maison sur lequel plusieurs capteurs d'humidité son fixés afin de suivre la variation du taux d'humidité sur une période longue.

### Buts de l'invention

La présente invention vise à fournir un élément de construction préfabriqué pour une maison à ossature en bois des moyens de détection d'humidité intégrés tel que défini par la revendication 1. Cette démarche permettant de rassurer définitivement le propriétaire d'une maison à ossature en bois qui sera désormais capable de détecter la moindre intrusion d'eau dans ses murs et de la localiser précisément.

L'invention fournit également un procédé de mesure et de localisation d'un taux anormalement élevé d'humidité dans cet élément de construction préfabriqué, tel que défini par la revendition 2, à l'aide d'un algorithme de comparaison faisant intervenir les humidités relatives à l'intérieur et à l'extérieur des immeubles et des valeurs de comparaison sur des immeubles se trouvant dans des environnements analogues par l'intermédiaire d'une transmission des informations mesurées par internet et gérées par un ordinateur central.

### Résumé de l'invention

La présente invention divulgue un élément de construction préfabriqué pour une maison à ossature en bois avec des moyens de détection d'humidité intégrés, ledit élément comportant un panneau extérieur et une ossature en bois comportant des montants, une sablière inférieure et une sablière supérieure, lesdits moyens de détection d'humidité comportant deux fils conducteurs placés en contact avec un matériau hydrophile, lui-même en contact avec ladite sablière inférieure, la sablière inférieure comportant une pente orientée vers ledit matériau hydrophile, les deux fils étant connectés à un boitier permettant d'effectuer des mesures de résistivité et de réflectométrie temporelle ledit boîtier étant intégré à l'élément de construction.

Selon des modes particuliers d'exécution de l'invention, celle-ci comporte au moins une ou une combinaison appropriée des caractéristiques suivantes :
- le matériau hydrophile comporte des fibres naturelles, de préférence des fibres de noix de coco ;
- le matériau hydrophile à base de fibres est comprimé contre la sablière inférieure par le panneau extérieur ;
- les deux fils conducteurs sont placés parallèlement sur la face verticale de la sablière inférieure à l'interface entre ladite sablière et une bande du matériau hydrophile ;
- en surplus des deux fils conducteurs on place un fil isolé et torsadé sur la face verticale de la sablière inférieure à l'interface entre ladite sablière et une bande du matériau hydrophile.
- ledit élément à une longueur comprise entre 2 et 16 mètres ;
- le boitier reste accessible, en utilisation, pour un raccordement à un boitier de surveillance central situé dans la construction ;
- la pente (a) de ladite sablière inférieure (5) est comprise entre 2 et 15 °, de préférence entre 5 et 10°.

L'invention fournit également un procédé de mesure d'un taux anormalement élevé d'humidité dans l'élément de construction susmentionné comportant les étapes suivantes :
- mesure de l'évolution du taux d'humidité du bois à proximité de la sablière inférieure près du matériau hydrophile au moyen de mesures de résistivité ou de réflectrométrie temporelle par le boîtier;
- comparaison de la variation du taux d'humidité du bois dans le temps avec la variation d'humidité relative à l'intérieur et à l'extérieur du bâtiment à l'aide de sondes de mesure d'humidité relative;
- comparaison des valeurs précédemment mesurées avec les valeurs mesurées dans d'autres constructions se trouvant dans des conditions analogues de température et d'humidité par l'envoi d'un signal à un ordinateur central;
- déclenchement d'une alerte au-delà d'un seuil prédéterminé pour la construction spécifique ;
- localisation précise du taux d'humidité anormalement élevé dans l'élément de construction susmentionné par une mesure de réflectométrie temporelle (TDR).

De préférence, les mesures sont transmises par internet à l'ordinateur central situé à distance permettant d'effectuer les différentes étapes de comparaison et le déclenchement de l'alerte.

### Brève description des figures

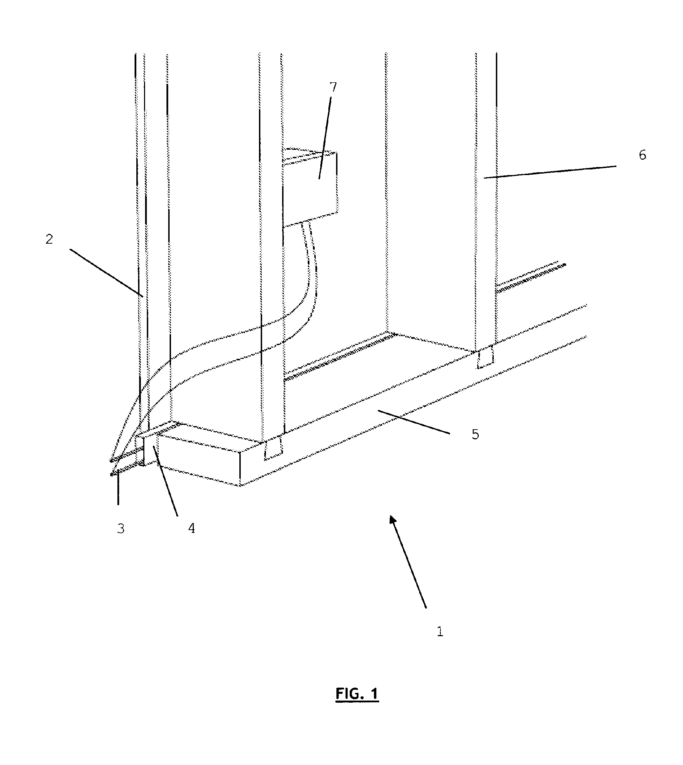

La figure 1 représente une vue en perspective de l'élément de construction préfabriqué d'une maison à ossature en bois selon l'invention. La sablière supérieure n'étant pas représentée.

La figure 2 représente une coupe de l'élément de construction préfabriqué selon l'invention. On y distingue le panneau extérieur, la sablière inférieure et les deux fils parallèles placés entre la sablière et une bande de fibres comprimée. La pente de la sablière est représentée par l'angle α.

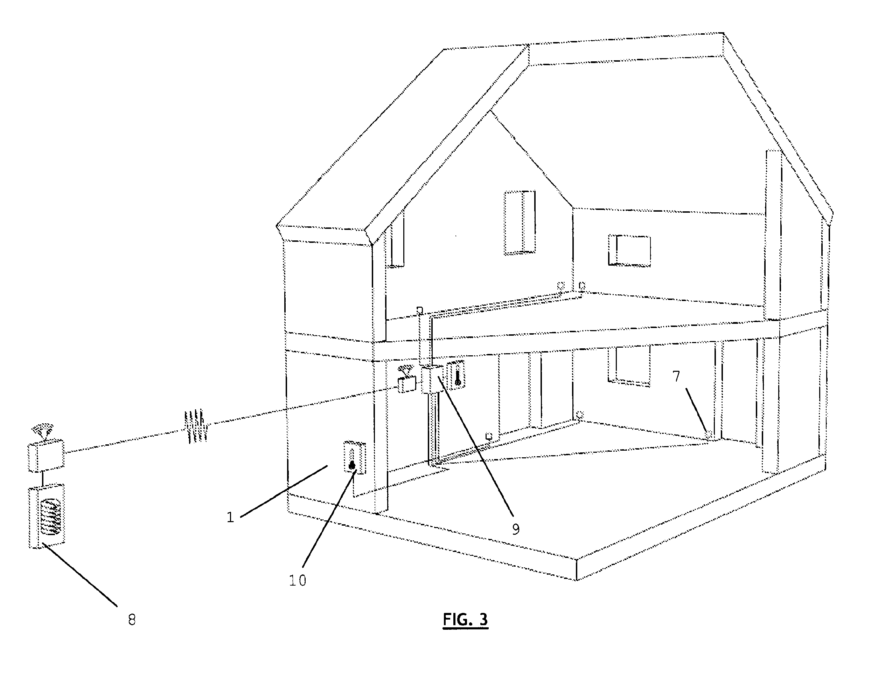

La figure 3 représente une construction à ossature bois utilisant les éléments préfabriqués selon l'invention. Elle montre également la connexion des boitiers à une console centrale (boitier électronique) et les sondes de mesure d'humidité relative à l'intérieur et à l'extérieur du bâtiment ainsi que le schéma de la transmission des informations vers un ordinateur central se trouvant à distance.

### Légende des figures

**1.** Elément de construction préfabriqué d'une maison à ossature en bois avec des moyens de détection d'humidité intégrés.
**2.** Paroi extérieure en bois ou équivalent.
**3.** Fils conducteurs.
**4.** Matériau hydrophile.
**5.** Sablière inférieure.
**6.** Montants.
**7.** Boitier de connexion.
**8.** Ordinateur central.
**9.** Boitier de surveillance central.
**10.** Sondes de mesure de l'humidité relative.

### Description détaillée de l'invention

La crainte de l'humidité dans la construction génère une méfiance vis-à-vis de la construction à ossature en bois. Ce type de construction devient néanmoins incontournable étant donné les épaisseurs d'isolation exigées pour les maisons passives ou à basse consommation d'énergie. Ces constructions utilisent généralement des pare-vapeurs rendant la construction quasiment étanche, afin de maitriser les échanges d'air ce qui nécessite alors des ventilations mécaniques régulées. Dans ce contexte il y a depuis longtemps une controverse entre les défenseurs des structures dites « respirantes » et des structures dites étanches notamment à cause de la position du point de rosée dans l'isolant. La complexité technique des arguments des uns et des autres finit alors souvent par décourager les candidats à la construction susceptibles de faire le choix de l'ossature bois.

Pour rendre ce débat inutile, l'inventeur a conçu un élément de construction pour les maisons à ossature en bois intégrant des moyens de détection d'une infiltration ou d'une condensation d'eau permettant de détecter toute anomalie liée à l'eau de manière précoce. Ces éléments sont préfabriqués en atelier.

Les parois extérieures des constructions à ossature en bois sont généralement constituées d'éléments sous forme de caissons ouverts comportant l'ossature en bois avec une sablière inférieure et une sablière supérieure séparés par des montants et un panneau extérieur en bois ou équivalent. Ces caissons sont destinés à recevoir des épaisseurs d'isolants importantes désormais exigées.

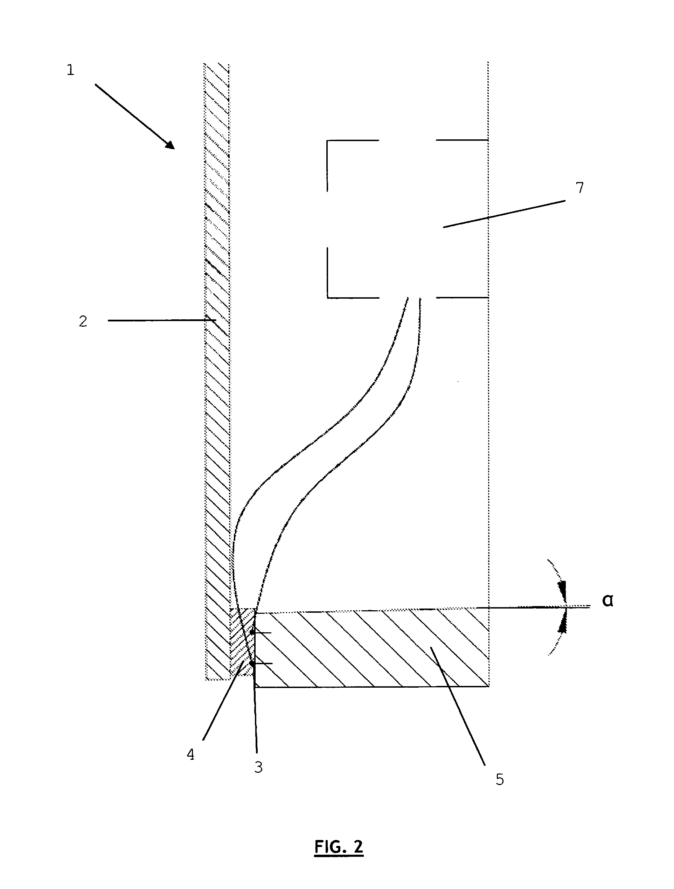

Le bois inférieur du caisson, appelé sablière, est légèrement biseauté avec un angle compris entre 1 et 15°, de préférence entre 2 et 10° et de manière particulièrement préférée entre 2 et 5 ° pour amener l'éventuelle eau de condensation ou d'infiltration vers une bande d'un matériau hydrophile capable de drainer l'humidité. Un tel matériau peut être constitué de fibres, de préférence de fibres de bois et de manière particulièrement préférée de fibres de noix de coco. La bande de fibres est de préférence comprimée entre la partie verticale de la sablière et le panneau extérieur de l'élément de construction préfabriqué. La présence d'humidité dans le matériau hydrophile drainant entraîne l'humidification du bois qui est mesurée par conductivité et/ou réflectométrie temporelle (TDR) sur deux fils conducteurs positionnées parallèlement. Ils sont de préférence en inox ou en cuivre étamé. Les fils conducteurs sont fixés entre la partie verticale de la sablière et la bande de matériau hydrophile. La fixation peut se faire par exemple par des agrafes (figure 2).

Pour augmenter la précision de la mesure on peut ajouter à ces deux fils un fil isolé et torsadé. La mesure sur ce fil permet d'augmenter considérablement la précision de la mesure quant il faut détecter avec précision l'emplacement d'une intrusion d'eau de manière précoce.

La périphérie du bâtiment est divisée en tronçons d'éléments d'une longueur comprise entre 2 et 16 mètres. Chaque élément comporte une boite de raccordement qui reste accessible et contient le raccordement de liaison entre les conducteurs et le boitier de surveillance central.

L'électronique du boitier de surveillance enregistre la conductivité et/ou la TDR ainsi que les températures et humidités de l'intérieur et de l'extérieur du bâtiment via des détecteurs adéquats. Ces mesures sont analysées par un processeur qui détermine s'il y a une présence accidentelle et soudaine d'eau (Variation de plus de 100% en deux heures par exemple).

De plus, le boitier est équipe d'une connexion réseau qui, connectée à INTERNET, envoie les mesures sur un serveur central à distance. Sur le serveur, un logiciel analyse les données avec celles reçues d'autres constructions situées dans un climat et altitude proches, pour détecter des variations non acceptables. Si de telles variations et différences apparaissent, le serveur envoie un message qui est affiché sur l'écran du boitier électronique de surveillance. Ce message de soupçon de présence anormale d'eau peut être accompagné d'une alerte sonore ou visuelle.

Lors de la fabrication de l'élément à ossature en bois selon l'invention, la mesure de la vitesse de propagation d'une onde (VOP) de la paire de conducteurs est mesurée et consignée. Lorsque les éléments sont montés en paroi de la construction, en cas de détection de présence d'eau ou de coupure des conducteurs, on peut ouvrir les boitiers qui restent accessibles et isoler les conducteurs. Une mesure de réflectométrie temporelle (TDR) permet alors de déterminer, en encodant la VOP de l'élément préfabriqué qui avait été préalablement consignée, la position exacte du taux d'humidité anormalement élevé.

### Principe de mesure

L'augmentation d'humidité relative dans le bois fait varier de manière logarithmique la conductivité électrique des fibres de bois. La variation de la résistance peut être globale et linéaire, ou ponctuelle et intense pour une même valeur d'humidité. Il est important de pouvoir analyser cette variation dans le temps. Si elle est rapide et importante, et localisée uniquement dans un élément spécifique selon l'invention, elle est la conséquence d'une présence accidentelle et localisée d'eau. Si cette variation est lente et régulière, il faut encore faire la différence entre une évolution normale de l'humidité du bois et une évolution pouvant représenter un défaut de mise en oeuvre. La comparaison peut se faire entre éléments d'une même construction en autonomie complète ou en comparaison avec d'autres constructions si le système a un accès à INTERNET.

Pour analyser les données de variation de résistance électrique et donner un résultat probant, on utilise dans la formule de comparaison, un coefficient de rapport entre la pression de vapeur intérieure et extérieure du bâtiment. Ces valeurs de pression de vapeur sont obtenues à l'aide de sondes de température et d'humidité relative de l'air ainsi que d'abaques. L'alerte est donnée si au cours d'une période paramétrable, la résistance électrique n'est pas revenue à son niveau normal. L'alerte peut être plus rapide si le système est en ligne avec la base de données sur un ordinateur central qui permet une comparaison plus fine avec un coefficient de sécurité plus petit.

Si un doute existe sur la présence d'une anomalie dans la cloison constituée des éléments selon l'invention, on mesure à l'aide d'un instrument portable la longueur de conducteur, c'est-à-dire la distance jusqu'à un circuit fermé en utilisant les techniques de réflectométrie temporelle (TDR).

La réflectométrie temporelle est une méthode de diagnostic basée sur le principe du radar. Un signal de sonde est envoyé dans le milieu à diagnostiquer, ce signal se propage selon les lois de propagation du milieu étudié et lorsqu'il rencontre une discontinuité d'impédance, une partie de son énergie est renvoyée vers le point d'injection. L'analyse du signal réfléchi permet de déduire la distance à laquelle se trouve une quantité anormale d'eau.

Afin d'éviter l'électrolyse, le boitier électronique relié à la terre équipotentielle les conducteurs. Ce n'est que pendant la durée de la mesure (1 s) que les conducteurs sont soumis à une très basse tension de mesure (12V).

### Exemple

Elément de 6 mètres de long et de 2,5 m de hauteur avec un panneau extérieur rainuré langueté de 15mm en OSB IV vissé (entraxe des vis 15cm) et une ossature en Epicéa.
Sablière inférieure de 50/148 mm biseautée à environ 2°. Sablière supérieure de 90/160mm.
Montants espacés de 50cm de 50mm/160mm emboités dans les sablières inférieures et supérieures par tenons et mortaises.
Le matériau hydrophile drainant est constituée par une bande de fibres de noix de coco de 50 mm /15 mm, densité « medium ».
Une paire de fils conducteurs de 2mm en INOX recuit mate espacé de 8 mm est agrafée sur la sablière sert de moyen de détection. Il y a donc 2 fois 6 m de fils conducteurs parallèles sur la sablière inférieure qui ne se rejoignent pas.

### Mesures

Elément de cloison sec avec humidité relative du bois de 12 % mesurée par un appareil a sonde à enfoncer dans le bois qui mesure la résistance électrique réglée sur la valeur 8388608 du convertisseur analogique/digital (A/D) de plage maximum de 67108864. (Mesures de chute de tension aux bornes d'une résistance - la VOP est de 54,9%)
Elément de cloison humidifié par un goute à goutte au milieu de l'élément sur la sablière inférieure.

| Temps | Goute à goute | % Hr du bois au niveau de la sablière | Mesure A/D | Mesure longueur au TDR (m) |
|---|---|---|---|---|
| 0 | ON | 12 | 8388608 | 6 |
| 5 min | ON | 16 | 1156224 | NC |
| 6 min | ON | 18 | 789211 | NC |
| 7 min | ON | 22 | 134787 | NC |
| 8 min | ON | 30 | 7353 | 2,85 |
| 9 min | OFF | >36 | 614 | 2,8 |
| 1 h | OFF | 24 | 71954 | NC |
| 4 h | OFF | 21 | 256078 | NC |
| 8 h | OFF | 19 | 817288 | NC |
| 24 h | OFF | 17 | 1765998 | NC |
| 48 h | OFF | 14 | 3487293 | 5.9 |
| 72 h | OFF | 12 | 7838452 | 6 |

Le goute à goutte est arrêté après 9 minutes et le taux d'humidité relative mesuré sur l'interface entre la sablière et la bande de fibres de noix de coco monte rapidement à 36 % après seulement 9 minutes. L'intrusion d'eau est détectée à environ 2,8 m alors qu'elle a lieu à 3 m en réalité. La précision est donc d'environ 20 cm dans ce cas.

Une précision plus grande peut néanmoins être obtenue avec le TDR si on ajoute une paire de fils isolés torsadés de 2 X 0,8 mm étamée par exemple qui est agrafée, au travers de son isolant, avec une clame à la hauteur de chaque caisson de 50 cm en parallèle aux deux autres fils.
Mais la précision de la résistance diminue. La solution consiste à poser la paire de fils INOX de 2mm et la paire de fils torsadés a sa terminaison libre dans le boitier de raccordement. La solution sans fils torsadés permet une précision de détection en réflectométrie temporelle de +/- 25 cm. Avec les fils torsadés, on atteint une précision de +/-5 cm.

## Revendications

1. Elément de construction préfabriqué (1) pour une maison à ossature en bois comportant des moyens de détection d'humidité intégrés, ledit élément comportant un panneau extérieur (2) et une ossature en bois comportant des montants (6), une sablière inférieure (5) et une sablière supérieure, lesdits moyens de détection d'humidité comportant deux fils conducteurs (3) placés en contact avec un matériau hydrophile (4), lui-même en contact avec la sablière inférieure (5), la sablière inférieure (5) comportant une pente orientée vers ledit matériau hydrophile (4), les deux fils étant connectés à un boitier (7) permettant d'effectuer des mesures de résistivité et de réflectométrie temporelle, **caractérisé en ce que** ledit boitier (7) est intégré à l'élément de construction (1).

2. Elément de construction (1) selon la revendication 1 **caractérisé en ce que** le matériau hydrophile (4) comporte des fibres naturelles, de préférence des fibres de noix de coco.

3. Elément de construction (1) selon la revendication 1 ou 2 **caractérisé en ce que** le matériau hydrophile (4) à base de fibres est comprimé contre la sablière inférieure (5) par le panneau extérieur (2).

4. Elément de construction (1) selon l'une quelconque des revendications précédentes **caractérisé en ce que** les deux fils conducteurs (3) sont placés parallèlement sur la face verticale de la sablière inférieure (5) à l'interface entre ladite sablière (5) et une bande du matériau hydrophile (4).

5. Elément de construction (1) selon l'une quelconque des revendications précédentes **caractérisé en ce que** en surplus des deux fils conducteurs (3) on place un fil isolé et torsadé sur la face verticale de la sablière inférieure (5) à l'interface entre ladite sablière (5) et une bande du matériau hydrophile (4).

6. Elément de construction (1) selon l'une quelconque des revendications précédentes **caractérisé en ce que** ledit élément à une longueur comprise entre 2 et 16 mètres.

7. Elément de construction (1) selon l'une quelconque des revendications précédentes **caractérisé en ce que** le boitier (7) reste accessible, en utilisation, pour un raccordement à un boitier de surveillance central (9) situé dans la construction.

8. Elément de construction (1) selon l'une quelconque des revendications précédentes **caractérisé en ce que** la pente (α) de ladite sablière inférieure (5) est comprise entre 1 et 15 °, de préférence entre 2 et 5°.

9. Procédé de mesure d'un taux anormalement élevé d'humidité dans l'élément de construction (1) selon l'une quelconque des revendications 1 à 8 comportant les étapes suivantes :
- mesure de l'évolution du taux d'humidité du bois à proximité de la sablière inférieure (5) près du matériau hydrophile (4) au moyen de mesures de résistivité ou de réflectométrie temporelle par le boitier (7);
- comparaison de la variation du taux d'humidité du bois mesuré dans le temps avec la variation d'humidité relative à l'intérieur et à l'extérieur du bâtiment à l'aide de sondes de mesure d'humidité relative (10);
- comparaison des valeurs précédemment mesurées avec les valeurs mesurées dans d'autres constructions se trouvant dans des conditions analogues de température et d'humidité par l'envoi d'un signal à un ordinateur central (8);
- déclenchement d'une d'alerte au-delà d'un seuil prédéterminé pour la construction spécifique ;
- localisation précise du taux d'humidité anormalement élevé dans l'élément (1) par une mesure de réflectométrie temporelle (TDR).

10. Procédé selon la revendication 9 **caractérisé en ce que** les mesures sont transmises par internet à l'ordinateur central (8) situé à distance permettant d'effectuer les différentes étapes de comparaison et le déclenchement de l'alerte.

## Claims

1. A prefabricated construction element (1) for a wooden frame house comprising integrated moisture detection means, said element comprising an outer panel (2) and a wooden frame comprising posts (6), a lower wall plate (5) and an upper wall plate, said moisture detection means comprising two conductive wires (3) placed in contact with a hydrophilic material (4), which in turn is in contact with the lower wall plate (5), the lower wall plate (5) comprising a slope oriented toward said hydrophilic material (4), the two wires being connected to a housing (7) making it possible to perform resistivity and time reflectometry measurements, **characterized in that** said housing (7) is integrated into the construction element (1).

2. The construction element (1) according to claim 1, **characterized in that** the hydrophilic material (4) comprises natural fibers, preferably coconut fibers.

3. The construction element (1) according to claim 1 or 2, **characterized in that** the fiber-based hydrophilic material (4) is compressed against the lower wall plate (5) by the outer panel (2).

4. The construction element (1) according to any one of the preceding claims, **characterized in that** the two conductive wires (3) are placed parallel to the vertical surface of the lower wall plate (5) at the interface between said wall plate (5) and a strip of the hydrophilic material (4).

5. The construction element (1) according to any one of the preceding claims, **characterized in that**, in addition to the two conductive wires (3), an insulated and twisted wire is placed on the vertical surface of the lower wall plate (5) at the interface between said wall plate (5) and a strip of the hydrophilic material (4).

6. The construction element (1) according to any one of the preceding claims, characterized an that said element has a length comprised between 2 and 16 meters.

7. The construction element (1) according to any one of the preceding claims, **characterized in that** the housing (7) remains accessible, during use, to be connected to a central monitoring housing (9) located in the construction.

8. The construction element (1) according to any one of the preceding claims, **characterized in that** the slope (α) of said lower wall plate (5) is comprised between 1 and 15°, preferably between 2 and 5°.

9. A method for measuring an abnormally high moisture level in the construction element (1) according to any one of claims 1 to 8, comprising the following steps:
- measuring the evolution of the moisture level of the wood close to the lower wall plate (5) near the hydrophilic material (4) using resistivity or time reflectometry measurements by the housing (7);
- comparing the variation of the moisture level of the wood measured over time with the moisture variation relative to the inside and outside of the building using relative moisture measuring probes (10);
- comparing the values previously measured with the values measured in other constructions found under similar temperature and moisture conditions by sending a signal to a central computer (8);
- triggering an alert beyond a predetermined threshold for the specific construction;
- precisely locating the abnormally high moisture level in the element (1) through a time reflectometry measurement (TRM).

10. The method according to claim 9, **characterized in that** the measurements are sent by internet to the central computer (8) located remotely, making it possible to perform the various comparison and alert triggering steps.

## Patentansprüche

1. Vorgefertigtes Konstruktionselement (1) für ein Haus mit Holzskelett, das integrierte Mittel für den Feuchtigkeitsnachweis aufweist, wobei das Element eine äußere Platte (2) und ein Holzskelett aufweist, das Stützen (6), eine untere Sohle (5) und eine obere Sohle aufweist, wobei die Mittel für den Feuchtigkeitsnachweis zwei Leitungsdrähte (3) aufweisen, die im Kontakt mit einem hydrophilen Material (4) platziert sind, das wiederum im Kontakt mit der unteren Sohle (5) ist, wobei die untere Sohle (5) eine Neigung aufweist, die in Richtung des hydrophilen Materials (4) ausgerichtet ist, wobei die zwei Drähte mit einem Kasten (7) verbunden sind, der es erlaubt, Widerstands- und Zeitbereichsreflektometriemessungen durchzuführen, **dadurch gekennzeichnet, dass** der Kasten (7) in das Konstruktionselement (1) integriert ist.

2. Konstruktionselement (1) nach Anspruch 1, **dadurch gekennzeichnet, dass** das hydrophile Material (4) Naturfasern aufweist, vorzugsweise Kokosnussfasern.

3. Konstruktionselement (1) nach Anspruch 1 oder 2, **dadurch gekennzeichnet, dass** das hydrophile Material (4) auf Faserbasis von der äußeren Stütze (2) gegen die untere Sohle (5) gedrückt wird.

4. Konstruktionselement (1) nach einem der vorangehenden Ansprüche, **dadurch gekennzeichnet, dass** die zwei Leitungsdrähte (3) parallel auf der vertikalen Seite der unteren Sohle (5) an der Schnittstelle zwischen der Sohle (5) und einem hydrophilen Materialstreifen (4) platziert sind.

5. Konstruktionselement (1) nach einem der vorangehenden Ansprüche, **dadurch gekennzeichnet, dass** zusätzlich zu den zwei Leitungsdrähten (3) ein isolierter Litzendraht auf der vertikalen Seite der unteren Sohle (5) an der Schnittstelle zwischen der Sohle (5) und einem hydrophilen Materialstreifen (4) platziert ist.

6. Konstruktionselement (1) nach einem der vorangehenden Ansprüche, **dadurch gekennzeichnet, dass** das Element eine Länge zwischen 2 und 16 Metern inklusive hat.

7. Konstruktionselement (1) nach einem der vorangehenden Ansprüche, **dadurch gekennzeichnet, dass** der Kasten (7) in Benutzung für einen Anschluss an eine zentrale Überwachungseinheit (9), die sich in der Konstruktion befindet, zugänglich bleibt.

8. Konstruktionselement (1) nach einem der vorangehenden Ansprüche, **dadurch gekennzeichnet, dass** die Neigung (α) der unteren Sohle (5) zwischen 1 und 15° inklusive beträgt, vorzugsweise zwischen 2 und 5°.

9. Verfahren zur Messung eines abnorm erhöhten Feuchtigkeitsgehalts in dem Konstruktionselement (1) nach einem der Ansprüche 1 bis 8, das die folgenden Schritte umfasst:
- Messen der Entwicklung des Feuchtigkeitsgehalts des Holzes in der Nähe der unteren Sohle (5) am hydrophilen Material (4) anhand von Widerstands- und Zeitbereichsreflektometriemessungen des Kastens (7),
- Vergleichen der Schwankung des Feuchtigkeitsgrads des Holzes, der früher gemessen wurde, mit der Schwankung der relativen Feuchtigkeit im und außerhalb des Gebäudes mit Hilfe von Messsonden der relativen Feuchtigkeit (10),
- Vergleichen der zuvor gemessenen Werte mit den Werten, die in anderen Konstruktionen gemessen wurden, die sich in analogen Temperatur- und Feuchtigkeitsbedingungen befinden, durch Versand eines Signals an einen Zentralrechner (8),
- über einer vorbestimmten Schwelle für die spezielle Konstruktion Ausgabe einer Warnung,
- exakte Lokalisierung des abnorm erhöhten Feuchtigkeitsgehalts in dem Element (1) durch eine Zeitbereichsrekflektometrie-Messung (TDR).

10. Verfahren nach Anspruch 9, **dadurch gekennzeichnet, dass** die Messwerte über das Internet an den Zentralrechner (8) übertragen werden, der sich entfernt befindet, der es erlaubt, die verschiedenen Vergleichsschritte und die Ausgabe der Warnung durchzuführen.
